# FASCICULE DE BREVET EUROPEEN

(11) **EP 0 576 346 B1**
(45) Date de publication et mention de la délivrance du brevet: **28.08.1996**
(21) Numéro de dépôt: 93401599.1
(22) Date de dépôt: 22.06.1993
(51) Int. Cl.: C10G 21/28, B01D 3/14

(54) **Procédé de déshydratation du solvant provenant d'une opération de déparaffinage d'hydrocarbures**
Verfahren zur Entwässerung von Lösungsmitteln von ein Kohlenwasserstoff Entwachsungsverfahren
Method of dehydrating solvant from hydrocarbons dewaxing (operation) process

(30) Priorité: 23.06.1992 FR 9207655
(43) Date de publication de la demande: 29.12.1993
(73) Titulaire: COMPAGNIE FRANCAISE D'ETUDES ET DE CONSTRUCTION "TECHNIP", F-92400 Courbevoie (FR)
(72) Inventeur: Pagnac, Marie, FR-75010 Paris (FR); Hournac, Roger, FR-75004 Paris (FR)
(74) Mandataire: Durand, Yves Armand Louis

(56) Documents cités:
- US-A- 2 655 468
- US-A- 4 898 674

## Description

La présente invention concerne un procédé de déparaffinage au solvant d'huiles d'hydrocarbures, et plus particulièrement un procédé permettant de déshydrater au moins en partie le solvant récupéré. Dans une forme de réalisation, le procédé permet d'ajuster le rapport solvant/antisolvant, en particulier le rapport toluène/méthyléthylcétone (MEK).

Les bases de distillats pour la production d'huiles lubrifiantes d'hydrocarbures récupérées lors de la distillation du pétrole sous pression atmosphérique et sous-vide requièrent divers traitements destinés à les amener aux spécifications. L'un de ces traitements est le déparaffinage ou décirage qui a pour objet d'éliminer les hydrocarbures à point de fusion relativement élevé, notamment les paraffines à chaîne linéaire, qui empêchent les huiles lubrifiantes de demeurer suffisamment fluides aux basses températures. Ce traitement fait habituellement suite à un raffinage utilisant par exemple le furfurol comme solvant.

Le déparaffinage est une opération bien connue qui met en oeuvre, généralement à basse température, un solvant ou un mélange de solvants tels qu'ils dissolvent les hydrocarbures à bas point de fusion tandis que les hydrocarbures à point de fusion élevé précipitent (paraffines) et peuvent être retenus sur un filtre.

Le plus souvent on utilise un mélange de solvants, par exemple un mélange d'un bon solvant pour la paraffine tel que le benzène ou le toluène, ci-après désigné par "solvant", et d'un mauvais solvant pour la paraffine, tel qu'une cétone ayant de 3 à 6 atomes de carbone, par exemple la méthyléthylcétone (MEK) ou la méthylisobutylcétone (MIBK), ci-après désigné par "antisolvant". On préfère ici un mélange de toluène et de MEK. Le mélange de solvant et d'antisolvant sera globalement désigné par "mélange solvant".

Pour une description détaillée de l'opération de déparaffinage, on pourra se référer à la littérature et aux brevets, et par exemple à l'ouvrage de P. Wuithier, Le Pétrole, Raffinage et Génie Chimique (1965), pages 641-649, et aux brevets US-A-4 088 565 et 4 354 921.

On opère généralement à basse température, par exemple vers -20 à -30°C et la filtration se fait habituellement sur des filtres rotatifs à vide, filtres qui doivent être nettoyés périodiquement par du solvant ou mélange de solvant sec. On sépare ensuite le mélange solvant récupéré de l'huile par toute manière appropriée, par exemple par distillation.

Ainsi la séparation des huiles et des paraffines est obtenue par un effet mécanique de filtration à basse température combiné à un effet chimique de dissolution dans un mélange solvant dont la composition optimale varie en fonction de la charge.

Cette unité a pour autre particularité de devoir traiter différents types de charge, ayant pour origine les différentes coupes de distillats d'une colonne sous-vide, de façon alternative et ceci tout au long de l'année.

Les quantités du mélange solvant nécessaires sont très importantes puisqu'elles varient entre 200 et 400% en volume de la charge à traiter.

Le mélange solvant est donc récupéré, après séparation des huiles et des paraffines dans différentes sections de récupération par apport thermique, puis recyclé à la filtration.

Le mélange solvant est de nature polaire, en raison de la présence de l'antisolvant qui est de nature hydrophile, et a tendance à fixer l'eau qu'il rencontre. Cette eau provient notamment de la charge et de la vapeur de strippage utilisée pour récupérer les dernières traces du mélange solvant dans les produits.

Compte-tenu de la nature polaire du mélange solvant, son séchage direct complet n'est actuellement pas pratiqué industriellement. Il demeure donc un problème non résolu dans l'industrie de manière économiquement satisfaisante, celui de réaliser une séparation fine eau/mélange solvant. Un autre problème non résolu de manière satisfaisante est le suivant :

Pour chaque type de charge d'une unité de déparaffinage correspondent des proportions antisolvant/solvant, par exemple MEK-toluène, optimales. L'unité de déparaffinage change fréquemment de charge (jusqu'à 2 à 3 fois par semaine par exemple) et il faut à l'exploitant un certain temps avant d'obtenir la bonne composition du mélange de solvant et d'antisolvant dans l'ensemble de l'unité pour la charge suivante, ceci compte-tenu notamment du temps de séjour important de cette unité.

Ceci a pour inconvénient de déséquilibrer l'unité, de ne plus lui permettre de fonctionner à l'optimum et de dégrader momentanément les rendements en huiles.

A titre d'exemple, le traitement d'un "bright stock" met couramment en oeuvre un rapport pondéral MEK/toluène de 0,7:1 à 1:1, tandis que le traitement d'huiles légères utilise couramment des rapports de 1,1:1 à 2,3:1.

Il est donc important de pouvoir produire aisément des réserves distinctes de mélanges solvants de compositions différentes afin de pouvoir disposer, par simple mélange de courants issus de ces réserves, de toute une gamme de compositions adaptées aux variations des charges traitées.

Ce problème est évoqué dans US-A-4 898 674, mais la solution proposée (emploi de membranes de pervaporation) demeure difficilement applicable industriellement.

Un premier objet de l'invention est donc de proposer un procédé simple et économique de séchage au moins partiel du mélange solvant/antisolvant humide récupéré.

Un autre objet est de produire, à partir d'un mélange solvant/antissolvant humide récupéré, des mélanges ajustables dans lesquels le rapport solvant/antisolvant diffère de celui du mélange solvant/antisolvant traité.

D'autres objets seront évidents aux spécialistes à la lecture de la description qui suit.

Selon l'invention, on met en oeuvre les étapes suivantes :
a) On envoie un mélange solvant humide (Mo) de solvant et d'antisolvant comme charge d'alimentation dans une première zone de distillation, on recueille en tête un premier distillat (M1) enrichi en eau et en fond un mélange solvant liquide (M2) de solvant et d'antisolvant appauvri en eau par rapport au mélange solvant de départ (Mo) et on décharge le mélange solvant (M2) qui constitue le mélange solvant au moins partiellement déshydraté recherché.
b) On met en contact le premier distillat (M1) avec de l'eau dont au moins une partie est constituée par le courant aqueux (A1) défini plus loin, la quantité d'eau mise en contact avec le premier distillat (M1) représentant 0,05 à 10 fois en poids la quantité du premier distillat, et on laisse décanter le mélange résultant en phase liquide dans une zone de décantation, pour obtenir une phase liquide supérieure, relativement pauvre en eau, et une phase liquide inférieure relativement riche en eau.
c) On renvoie la phase liquide supérieure à la première zone de distillation, comme reflux.
d) On envoie la phase liquide inférieure dans une seconde zone de distillation et on recueille dans ladite seconde zone de distillation un produit de tête relativement enrichi en antisolvant, constituant essentiellement ledit courant aqueux (A1), et un produit de fond relativement appauvri en antisolvant et constitué essentiellement d'eau, on soutire le produit de fond et on renvoie à l'étape (b) ledit courant aqueux (A1).

Lorsque le courant aqueux (A1) renvoyé à l'étape (b) ne renferme pas suffisamment d'eau pour fournir la quantité d'eau requise à cette étape, on ajoute de l'eau complémentaire. Cette eau peut provenir d'un apport extérieur ou très avantageusement d'un second courant aqueux (A2) obtenu par recyclage partiel du produit de fond de la seconde zone de distillation.

Selon une variante du procédé, destinée à fournir au moins deux courants du mélange solvant au moins partiellement déshydraté et dont les rapports solvant/antisolvant diffèrent, on décharge de la première zone de distillation, en au moins un point intermédiaire de celle-ci, situé au-dessus du point d'alimentation de ladite zone en mélange humide (Mo) de solvant et d'antisolvant, au moins un mélange liquide (M3) relativement plus riche en antisolvant et plus pauvre en solvant que les mélanges (Mo) et (M2). Le mélange (M3) peut également être plus pauvre en eau que le mélange d'alimentation (Mo) à condition de le soutirer à une distance relativement faible au-dessus du point d'alimentation en mélange (Mo).

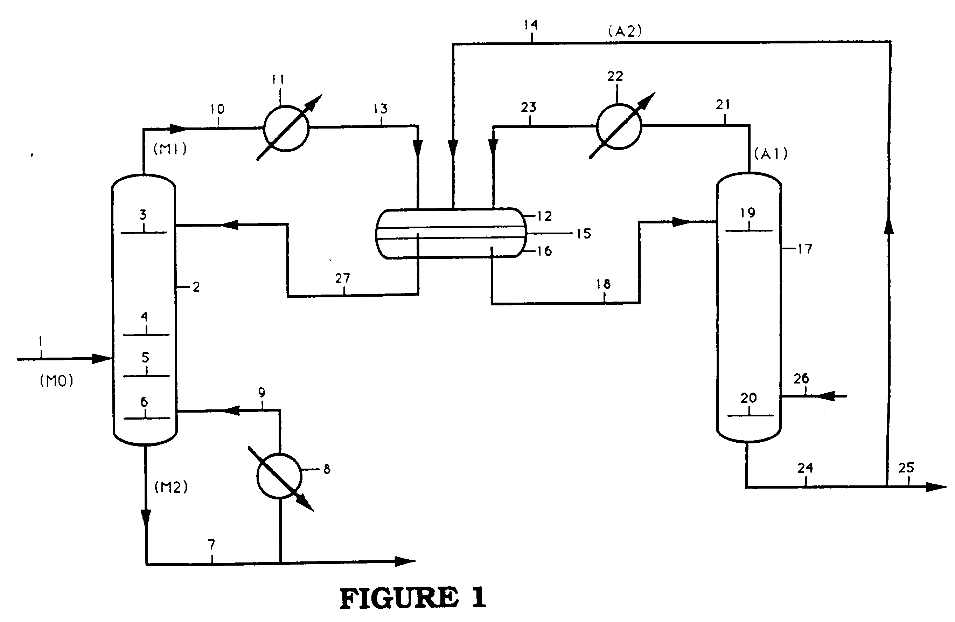

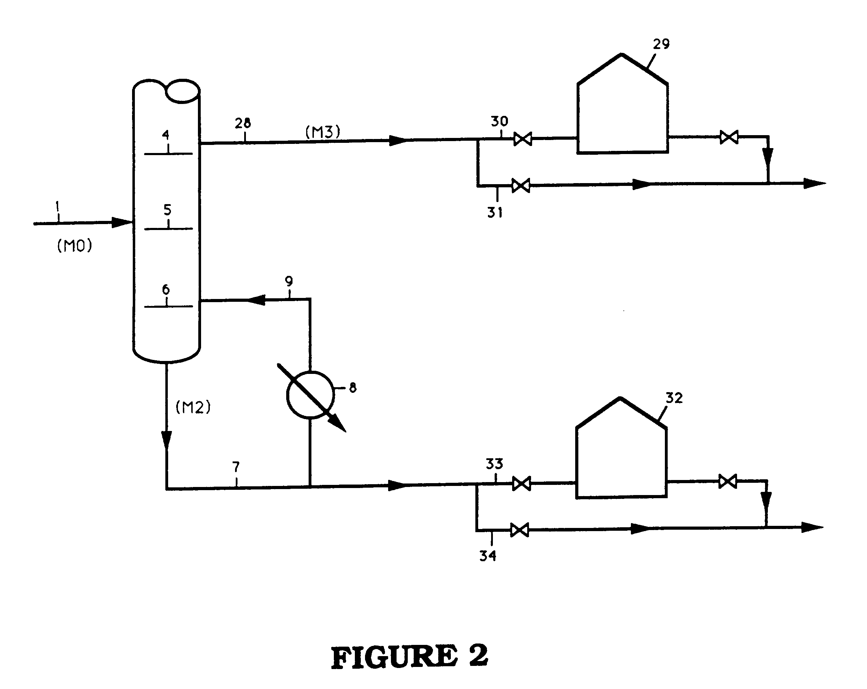

Les figures 1 et 2 illustrent l'invention.

La figure 1 illustre le mode de réalisation de base de l'invention, sans soutirage intermédiaire de mélange (M3).

La figure 2 est une vue partielle de l'installation, dans le cas où l'on procède à un soutirage intermédiaire de mélange (M3).

Le mélange de départ (Mo), par exemple un mélange eau/MEK/toluène est introduit par la ligne 1 dans la colonne 2 qui est avantageusement équipée de dispositifs internes améliorant le contact liquide/vapeur.

Sur la figure on a représenté des plateaux tels que 3, 4, 5 et 6, mais il est entendu que le nombre d'étages de fractionnement est variable et que tout autre dispositif connu de l'homme de métier pourrait être utilisé, par exemple un garnissage en anneaux Raschig, selles de Berl ou équivalent.

En fond, on recueille le mélange (M2) de solvant et d'antisolvant au moins partiellement déshydraté (ligne 7).

Le chauffage de la colonne peut être réalisé par tout moyen conventionnel. On a représenté ici un rebouilleur 8 et une ligne de retour d'un courant partiellement ou totalement en phase vapeur 9. En tête de la colonne on recueille un courant de vapeur 10 (M1) qui est liquéfié dans le condenseur 11 pour alimenter le ballon de décantation 12 par la ligne 13.

Lorsqu'une quantité d'eau suffisante, amenée par la ligne 23 et éventuellement par la ligne 14, est présente dans le décanteur 12, deux phases liquides se séparent :
- Une phase supérieure 15, pauvre en eau et riche en solvant et antisolvant; le rapport R (solvant/antisolvant) de cette phase supérieure est toutefois plus faible que celui de l'alimentation (ligne 1), tandis que sa teneur en eau est plus forte que celle de l'alimentation.
- Une phase inférieure 16 riche en eau et qui entraîne une proportion substantielle d'antisolvant et une proportion très faible de solvant. Cette dernière phase alimente une seconde colonne de distillation 17 par l'intermédiaire de la ligne 18. Cette colonne peut, comme la colonne 2, être équipée de dispositifs de contact, par exemple des plateaux tels que 19 et 20. Le produit de tête (ligne 21) constitue le courant (A1); il est condensé dans le condenseur 22 et parvient au décanteur 12 par la ligne 23. Le produit de fond, constitué essentiellement d'eau, est soutiré par la ligne 24; une partie (ligne 25) est déchargée et une autre partie, constituant le courant (A2), est renvoyée au décanteur 12 par la ligne 14.

En variante tout le produit de fond 24 est déchargé par la ligne 25 et l'eau complémentaire nécessaire au décanteur 12 provient d'une autre source.

Très avantageusement de la vapeur d'eau (ligne 26) apporte une partie au moins de la chaleur nécessaire à la distillation qui s'opère dans la colonne 17. Il est toutefois envisagé dans l'invention d'utiliser d'autres modes d'apport de chaleur à ladite colonne. La vapeur de strippage (26) peut avantageusement provenir de la vaporisation d'une partie de l'eau soutirée par la ligne 24.

La ligne 27 permet le renvoi de la phase liquide 15 vers la colonne 2 comme reflux.

Sur la figure 2, on retrouve une partie du schéma de la figure 1 avec la colonne 2 et le soutirage de fond du mélange (M2). On a représenté aussi un réservoir 32 pour le mélange (M2), alimenté par la ligne 33. La ligne 34 permet de soutirer immédiatement le mélange solvant (M2) pour d'autres utilisations, notamment pour alimenter une unité de déparaffinage.

On trouve en plus un soutirage (ligne 28) du mélange solvant (M3) qui permet soit d'alimenter le réservoir 29 par la ligne 30 soit de recycler directement ce mélange, par la ligne 31 à une unité de déparaffinage.

On appréciera qu'avec le schéma de la fig. 2 le rapport R (solvant/antisolvant) du mélange (M2) (ligne 7 et réservoir 32) est plus élevé que celui de l'alimentation (Mo) (ligne 1). Au contraire le rapport R du mélange (M3) (ligne 28 et réservoir 29) est plus faible que celui à la fois de (Mo) et de (M2). La teneur en eau de (M2) est aussi beaucoup plus faible que celle de (Mo). La teneur en eau de (M3) est normalement plus faible que celle de (Mo), tout au moins quand (M3) est soutiré à une faible distance au-dessus de l'alimentation (Mo). Même si, à une hauteur plus élevée, la proportion d'eau de (M3) égalait ou même dépassait quelque peu celle de (Mo), ce serait sans inconvénient majeur dans la mesure où l'on utiliserait, dans une opération subséquente, un mélange de (M3) et (M2) tel que la teneur en eau globale soit plus faible que celle de (Mo).

Le courant (M3) peut représenter par exemple 0 à 50% (en volume) du courant (Mo), le courant (M2) représentant alors environ 100 à 50% du courant (Mo). Ces proportions (en volume) sont de préférence respectivement 25 à 40% et environ 75 à 60%. La totalité des courants (M2) et (M3) peut différer légèrement de 100% par rapport à (Mo) du fait de leur moindre teneur en eau.

Il est clair que diverses modifications, de la compétence de l'homme du métier, peuvent être apportées à ces schémas. A titre d'exemple, au lieu de faire aboutir les conduites 13, 14 et 23 séparément au décanteur 12, on peut réaliser un mélange en ligne de deux ou trois des courants de ces lignes. L'un au moins des courants 13 et 23 peut encore être en phase vapeur tandis que le courant 14 est en phase liquide. Le passage dans un condenseur unique peut aussi faire suite au mélange des courants de vapeur 10 et 21; dans ce cas l'un des condenseurs 11 ou 22 est inutile.

Les deux colonnes de distillation peuvent être mises en oeuvre à la même pression ou à des pressions différentes. On préfère opérer à la pression atmosphérique pour des raisons d'économie, mais certains avantages peuvent résulter d'une opération sub-atmosphérique ou super-atmosphérique, par exemple entre 0,5 et 5 bars absolus.

Les températures opératoires sont évidemment liées au choix de la pression et à celui du couple solvant/antisolvant. En opérant par exemple sous la pression atmosphérique avec le mélange MEK/toluène, les condenseurs 11 et 22 peuvent être refroidis sans difficulté à l'eau ou à l'air, tout au moins sous les climats tempérés.

Une variable importante du procédé est le choix de la quantité d'eau envoyée au ballon décanteur 12 ou directement à la ligne 10 ou 13 pour y rencontrer le mélange (M1). Cette eau provient, dans l'exemple choisi, des lignes 23 en mineure partie et 14 en majeure partie; au total cette quantité d'eau représentera 0,05 à 10 fois, de préférence 0,05 à 2 fois, encore mieux 0,1 à 0,5 fois, en poids, la quantité de distillat (lignes 10 ou 13) de la colonne 2.

Comme cette eau peut circuler en circuit fermé en large partie, à part la quantité extraite par la ligne 25 et celle amenée par le distillat de la colonne 2, il n'est pas indispensable de faire des apports supplémentaires, sauf pour compenser les pertes.

Le mélange solvant humide (Mo) qui alimente la première zone de distillation peut renfermer, en poids, par exemple 0,5 à 4% d'eau, 30 à 60% de solvant et 35 à 70% d'antisolvant, le total représentant 100%.

Si l'on a besoin d'ajouter du solvant et de l'antisolvant dans l'installation, cet ajout peut se faire en tout point adéquat de cette installation.

L'exemple suivant illustre un mode non limitatif de mise en oeuvre de l'invention.

On alimente la colonne (2) par la ligne (1) à l'aide de 42416 kg/h d'un mélange de 2,1% d'eau, 58,7% de MEK et 39,2% de toluène (tous les % de l'exemple sont en poids). En tête on recueille 19304 kg/h d'un mélange de 13,2% d'eau, 77,6% de MEK et 9,2% de toluène, ledit mélange étant condensé (11) et mis en contact, dans le ballon (12), avec 2502 kg/h d'un courant d'eau sensiblement pure (14) et 916 kg/h d'un courant aqueux (23) formé de 10,3% d'eau, 89,5% de MEK et 0,2% de toluène. Du ballon (12) on soutire une phase supérieure riche en MEK (18464 kg/h d'un mélange eau, MEK et toluène), qui est renvoyée à la colonne 2, et une phase inférieure riche en eau (4261 kg/h d'un mélange eau, MEK et traces de toluène) qui est envoyée à la colonne 17. De la vapeur d'eau introduite par la ligne 26 strippe la MEK et les traces de toluène, évacuées par la ligne 21. En fond, par la ligne 25, on recueille 4032 kg/h d'eau contenant 0,05% de MEK et pratiquement pas de toluène.

Le produit de fond de la colonne 2, soutiré du procédé, représente 41599 kg/h d'un mélange de 60% de MEK, 39,9% de toluène et 0,1% d'eau. Ce mélange peut être utilisé comme mélange solvant pour une opération de déparaffinage subséquente.

L'ensemble de l'installation fonctionne sur une pression sensiblement égale à la pression atmosphérique.

## Revendications

1. Procédé de déshydratation au moins partielle, d'un mélange solvant humide récupéré d'un procédé de déparaffinage, ledit mélange solvant humide récupéré comprenant un solvant et un antisolvant pour la paraffine ainsi que de l'eau, caractérisé par les étapes suivantes :
a) On envoie un mélange solvant humide (Mo) de solvant et d'antisolvant comme charge d'alimentation dans une première zone de distillation, on recueille en tête un premier distillat (M1) enrichi en eau et en fond un mélange solvant liquide (M2) de solvant et d'antisolvant appauvri en eau par rapport au mélange solvant de départ (Mo) et on décharge le mélange solvant (M2) qui constitue le mélange solvant au moins partiellement déshydraté recherché,
b) On met en contact le premier distillat (M1) avec de l'eau dont au moins une partie est constituée par le courant aqueux (A1) défini plus loin, la quantité d'eau mise en contact avec le premier distillat (M1) représentant 0,05 à 10 fois en poids la quantité du premier distillat, et on laisse décanter le mélange résultant en phase liquide dans une zone de décantation, pour obtenir une phase liquide supérieure, relativement pauvre en eau, et une phase liquide inférieure relativement riche en eau,
c) On renvoie la phase liquide supérieure à la première zone de distillation, comme reflux,
d) On envoie la phase liquide inférieure dans une seconde zone de distillation et on recueille dans ladite seconde zone de distillation un produit de tête relativement enrichi en antisolvant, constituant essentiellement ledit courant aqueux (A1), et un produit de fond relativement appauvri en antisolvant et constitué essentiellement d'eau, on soutire le produit de fond et on renvoie à l'étape (b) ledit courant aqueux (A1).

2. Procédé selon la revendication 1, caractérisé en ce que, pour obtenir au moins deux courants de mélange solvant au moins partiellement déshydraté, présentant des rapports solvant/antisolvant différents, on décharge de la première zone de distillation, en au moins un point intermédiaire de celle-ci, situé au-dessus du point d'alimentation de ladite zone en mélange humide (Mo) de solvant et d'antisolvant, au moins un mélange liquide (M3) relativement plus riche en antisolvant et plus pauvre en solvant que les mélanges (Mo) et (M2).

3. Procédé selon l'une des revendications 1 ou 2, caractérisé en ce que le solvant est le toluène et l'antisolvant est la méthyléthylcétone.

4. Procédé selon l'une des revendications 1 à 3, caractérisé en ce que de la vapeur d'eau est introduite dans la seconde zone de distillation pour stripper le solvant.

5. Procédé selon l'une des revendications 1 à 4, caractérisé en ce qu'une partie de l'eau nécessaire à l'étape (b) est constituée par une partie du produit de fond de l'étape (d).

6. Procédé selon l'une des revendications 1 à 5, caractérisé en ce que la quantité totale d'eau mise en contact avec le premier distillat (M1) à l'étape (b) représente 0,05 à 2 fois en poids la quantité de premier distillat (M1).

7. Procédé selon l'une des revendications 1 à 6, caractérisé en ce que le mélange solvant humide (Mo) qui est envoyé à la première zone de distillation comprend, en poids, 0,5 à 4% d'eau, 30 à 60% de solvant et 35 à 70% d'antisolvant.

## Patentansprüche

1. Verfahren zur wenigstens teilweisen Dehydratisierung einer feuchten Solventmischung, die bei einem Entparaffinierungsverfahren zurückgewonnen worden ist, wobei die zurückgewonnene Solventmischung einen Solvent und einen Antisolvent für das Paraffin sowie Wasser enthält, gekennzeichnet durch die folgenden Schritte :
a) man sendet eine feuchte Solventmischung (Mo) von Solvent und Antisolvent als Speisecharge in eine erste Destillierungszone, gewinnt am Kopf ein erstes, mit Wasser angereichertes Destillat (M1) und am Boden ein flüssiges Solventgemisch (M2) aus Solvent und Antisolvent, das gegenüber der Ausgangssolventmischung an Wasser verarmt ist und zieht die Solventmischung (M2) ab, die die gesuchte wenigstens teilweise dehydratisierte Solventmischung darstellt,
b) man bringt das genannte erste Destillat (M1) mit dem Wasser in Berührung, von dem wenigstens ein Teil von dem wässerigen Strom (A1) gebildet wird, der weiter unten definiert ist, wobei die Menge des mit dem ersten Destillat (M1) in Berührung gebrachten Wassers 0,05 bis 10 mal an Gewicht die Menge des ersten Destillats darstellt, und man lässt das Gemisch sich dekantieren, das als Flüssigphase in einer Dekantierungszone gebildet wird, um eine obere flüssige Phase, die verhältnismässig arm an Wasser ist und eine untere flüssige Phase zu erhalten, die verhältnismässig reich an Wasser ist,
c) man sendet die obere flüssige Phase als Rückfluss in die erste Destillationszone,
d) man sendet die untere flüssige Phase in eine zweite Destillationszone und gewinnt in der genannten zweiten Destillationszone ein Kopfprodukt, das verhältnismässig reich an Antisolvent ist und im wesentlichen den genannten wässerigen Strom (A1) bildet, und ein Fussprodukt, das verhältnismässig an Antisolvent verarmt ist und im wesentlichen Wasser darstellt, man zieht das genannte Fussprodukt ab und schickt den genannten wässerigen Strom (A1) an den zweiten Schritt (b) zurück.

2. Verfahren nach Anspruch 1, dadurch gekennzeichnet, dass, um wenigstens zwei Solventmischungsströme, die wenigstens teilweise dehydratisiert sind und verschiedene Solvent/Antisolventverhältnisse darstellen, man in der genannten ersten Destillationszone an wenigstens einem mittleren Punkt von dieser, der oberhalb des Speisepunktes der genannten Zone mit feuchtem Gemisch (Mo) von Solvent und Antisolvent gelegen ist, wenigstens ein flüssiges Gemisch (M3), das verhältnismässig reicher an Antisolvent und ärmer an Solvent ist als die Gemische (Mo) und (M2).

3. Verfahren nach einem der Ansprüche 1 und 2, dadurch gekennzeichnet, dass der Solvent Toluol ist und der Antisolvent Methyläthylketon ist.

4. Verfahren nach einem der Ansprüche 1 bis 3, dadurch gekennzeichnet, dass Wasserdampf in die zweite Destillationszone eingeführt wird, um den Solvent zu strippen.

5. Verfahren nach einem der Ansprüche 1 bis 4, dadurch gekennzeichnet, dass ein Teil des im Schritt (b) notwendigen Wassers von einem Teil des Products des Schrittes (d) gebildet wird.

6. Verfahren nach einem der Ansprüche 1 bis 5, dadurch gekennzeichnet, dass die gesamte Wassermenge, die mit dem ersten Destillat (M1) im Schritt (b) in Berührung gebracht werden, 0,05 bis 2 mal an Gewicht der Menge an ersten Destillat (M1) enthält.

7. Verfahren nach einem der Ansprüche 1 bis 6, dadurch gekennzeichnet, dass die feuchte Solventmischung (Mo), die in die erste Destillationszone geschickt wird, an Gewicht 0,5 bis 4% Wasser, 30 bis 60% Solvent und 35 bis 70% Antisolvent enthält.

## Claims

1. Method of at least partially dehydrating a moist solvent mixture recovered from a dewaxing process, the said recovered moist solvent mixture comprising a solvent and an antisolvent for paraffin as well as water, characterized by the following steps :
a) One supplies a moist solvent mixture (M₀) of solvent and antisolvent as a feed batch into a first distillation zone, one collects at the head a first distillate (M₁) enriched in water and at the bottom a liquid solvent mixture (M₂) of solvent and antisolvent impoverished in water with respect to the starting solvent mixture (M₀) and one discharges the liquid solvent mixture (M₂) which constitutes the desired at least partially dehydrated solvent mixture;
b) One contacts the first distillate ((M₁) with water at least one portion of which is constituted by the aqueous stream (A1) defined hereinafter, the amount of water contacted with the first distillate (M₁) representing 0.05 to 10 times by weight the amount of the first distillate and one lets the resulting mixture in liquid phase decanting in a decanting zone to obtain an upper liquid phase relatively lean in water and a lower liquid phase relatively rich in water;
c) One conveys the upper liquid phase as a reflux back to the first distillation zone;
d) One feeds the lower liquid phase into a second distillation zone and one recovers in the said second distillation zone a head product relatively enriched in antisolvent, essentially forming the said aqueous stream (A1) and a bottom product relatively impoverished in antisolvent and consisting essentially of water, one draws off the bottom product and one returns the said aqueous stream (A1) to the step (b).

2. Method according to claim 1, characterized in that to obtain at least two streams of an at at least partially dehydrated solvent mixture exhibiting different solvent/antisolvent ratios, one discharges from the first distillation zone at at least one intermediate point thereof located above the point of feeding the said zone with the moist mixture (M₀) of solvent and antisolvent at least one liquid mixture (M₃) relatively richer in antisolvent and leaner in solvent than the mixtures (M₀) and (M₂).

3. Method according to one of claims 1 or 2, characterized in that the solvent is toluol and the antisolvent is methylethylketone.

4. Method according to one of claims 1 to 3, characterized in that steam is fed into the second distillation zone for stripping the solvent.

5. Method according to one of claims 1 to 4, characterized in that one portion of the water necessary to the step (b) is constituted by one portion of the bottom product of the step (d).

6. Method according to one of claims 1 to 5, characterized in that the total amount of water contacted with the first distillate (M₁) during the step (b) represents 0.05 to 2 times by weight the amount of the first distillate (M₁).

7. Method according to one of claims 1 to 6, characterized in that the moist solvent mixture (M₀) which is supplied to the first distillation zone comprises by weight 0.5% to 4% of water, 30% to 60% of solvent and 35% to 70% of antisolvent.
